# EUROPÄISCHE PATENTSCHRIFT

(11) **EP 3 797 641 B1**
(45) Veröffentlichungstag und Bekanntmachung des Hinweises auf die Patenterteilung: **12.06.2024**
(21) Anmeldenummer: 20195779.2
(22) Anmeldetag: 11.09.2020
(51) Int. Cl.: A46B 13/00, B60S 3/06

(54) **TRÄGERELEMENT ZUM BEFESTIGEN VON BANDELEMENTEN EINER DREHWASCHBÜRSTE SOWIE DREHWASCHBÜRSTE MIT DERARTIGEN TRÄGERELEMENTEN**
SUPPORT ELEMENT FOR FIXING STRIP ELEMENTS OF A ROTARY WASHING BRUSH AND ROTARY WASHING BRUSH COMPRISING SUCH SUPPORT ELEMENTS
ÉLÉMENT PORTEUR PERMETTANT DE FIXER LES ÉLÉMENTS DE BANDE D'UNE BROSSE DE LAVAGE ROTATIVE AINSI QUE BROSSE DE LAVAGE ROTATIVE DOTÉE DES TELS ÉLÉMENTS PORTEURS

(30) Priorität: 30.09.2019 DE 202019105411 U
(43) Veröffentlichungstag der Anmeldung: 31.03.2021
(73) Patentinhaber: Stegemann, René, 52538 Gangelt (DE)
(72) Erfinder: Stegemann, René, 52538 Gangelt (DE)
(74) Vertreter: Stolmár & Partner Patentanwälte PartG mbB

(56) Entgegenhaltungen:
- EP-B1- 1 962 639
- US-A1- 2013 180 065

## Beschreibung

Die Erfindung betrifft ein Trägerelement zum Befestigen von Bandelementen einer Drehwaschbürste mit einer zylinderförmigen Innenfläche, mit der das Trägerelement zumindest drehfest auf einer Drehwelle befestigbar ist, einer zylinderförmigen Außenfläche, an der die Bandelemente befestigbar sind, und Ausnehmungen, die in der zylinderförmigen Außenfläche ausgebildet sind, und in die Klemmstangen zur Befestigung der Bandelemente einführbar sind, sowie eine Drehwaschbürste mit derartigen Trägerelementen und mit einer Drehwelle, auf der mindestens zwei der Trägerelemente auf ihren Grundflächen aufeinander aufliegend zumindest drehfest befestigt sind und Bandelementen, die mittels Klemmstangen in den Ausnehmungen der zylinderförmigen Außenfläche befestigt sind.

Derartige Drehwaschbürsten werden in Waschanlagen beziehungsweise Waschstraßen für Kraftfahrzeuge, insbesondere für Personenkraftwagen verwendet. Es handelt sich um Bürsten, die seitlich sowie frontal vor und hinter dem Fahrzeug sowie oberhalb des Fahrzeugs entlang geführt werden und dabei eine Drehung ausführen. Durch diese Drehung werden Bandelemente, die an Trägerelementen befestigt sind, von denen wiederum mehrere auf einer angetriebenen Drehwelle befestigt sind, am Fahrzeug entlang geführt, wodurch dieses mechanisch gereinigt wird. Die Bandelemente werden dabei an den Trägerelementen zumeist durch in den Ausnehmungen angeordnete Klemmstangen gehalten.

Eine derartige Drehwaschbürste ist beispielsweise aus der EP 1 962 639 B1 bekannt. Bei dieser Drehwaschbürste weisen die Klemmstangen an ihren Enden eine radiale Erweiterung beziehungsweise einen axialen Vorsprung auf, die in korrespondierend geformte Ausnehmungen eingeschoben werden, wodurch die Klemmstange mit den Bandelementen am Trägerelement fixiert ist. Des Weiteren werden Ausnehmungen an den Trägerelementen offenbart, die schräg zur Drehachse angestellt sind, wodurch ein besseres Waschergebnis erzielt werden soll.

Zusätzlich ist aus der US 2013/0180065 A1 eine Waschbürste bekannt, bei der die Ausnehmungen in einem axial ersten Teil des Trägerelementes der Bürste zu einer Seite gekippt sind und in einem axial angrenzenden Teil zur entgegengesetzten Richtung jedoch etwa um den gleichen Winkel gekippt sind. Entsprechend wird die Fläche, mit denen die Bandelemente das zu waschende Fahrzeug berühren, vergrößert. Auch können unterschiedliche Winkel der Bandelemente erzeugt werden, wodurch insgesamt das Waschergebnis verbessert wird.

Des Weiteren ist aus der WO 2019/092515 A1 eine Waschbürste bekannt, bei der entweder zylindrische Trägerelemente gekippt auf einer Welle befestigt werden oder die Trägerelemente einen Hyperboloiden mit elliptischer Grundfläche bilden, die von oben nach unten um 90° gedreht ist.

Es besteht jedoch bei den bekannten Ausführungen der Nachteil, dass weiterhin auf eine bestimmte Stelle des Fahrzeugs ein im Wesentlichen gleicher Teil verschiedener Bandelemente in gleicher Weise wirkt, so dass weiterhin ein nicht ausreichend gutes Waschergebnis erzielt wird.

Es stellt sich daher die Aufgabe, ein Trägerelement zum Befestigen von Bandelementen einer Drehwaschbürste sowie eine Drehwaschbürste mit derartigen Trägerelementen bereit zu stellen, mit denen die Waschergebnisse verbessert werden, ohne dass zusätzliche Bürsten benötigt werden oder die Waschzeit verlängert werden muss.

Diese Aufgabe wird durch ein Trägerelement zum Befestigen von Bandelementen einer Drehwaschbürste mit den Merkmalen des Hauptanspruchs 1 sowie eine Drehwaschbürste mit derartigen Trägerelementen mit den Merkmalen des Hauptanspruchs 9 gelöst.

Dass erfindungsgemäße Trägerelement weist eine zylinderförmige Innenfläche und eine zylinderförmige Außenfläche auf, an der die Bandelemente befestigt werden.

Die zylinderförmige Außenfläche ist erfindungsgemäß zur zylinderförmigen Innenfläche um 2° bis 25° gekippt ausgebildet ist. Dadurch besteht bei einer Umdrehung des Trägerelementes ein sich ändernder Abstand der Bandelemente zu einer definierten Stelle am Fahrzeug und eine Art überlagerte Hubbewegung, da die Bandelemente zumindest teilweise schräg zur Mittelachse gekippt sind, so dass sie in einem unterschiedlichen Winkel auf die definierte Position des Fahrzeugs treffen. Dies führt zu einem deutlich verbesserten Waschergebnis oder alternativ zu schnelleren Durchgangszeiten.

Bezüglich der Drehwaschbürste wird die Aufgabe dadurch gelöst, dass die Drehwaschbürste eine Drehwelle aufweist, auf der mindestens zwei der Trägerelemente befestigt sind. Die beiden Trägerelemente liegen mit ihren gegenüberliegenden Grundflächen aufeinander auf und sind drehfest an der Drehwelle befestigt. Des Weiteren weist die Drehwaschbürste Bandelemente auf, die mittels Klemmstangen in den Ausnehmungen der zylinderförmigen Außenfläche befestigt sind. Eine Drehachse der Drehwelle entspricht einer Mittelachse der zylinderförmigen Innenfläche, so dass eine Drehung des Trägerelementes um die Mittelachse der zylinderförmigen Innenfläche erfolgt. Die zylinderförmige Außenfläche des jeweils ersten Trägerelementes ist zur zylinderförmigen Außenfläche des jeweils gegenüberliegenden zweiten Trägerelementes in entgegengesetzter Richtung zur Drehachse der Drehwelle gekippt, so dass in diesen Abschnitten die Auf- und Abbewegungen der Bandelemente am Fahrzeug gegensätzlich erfolgen, wodurch eine zusätzliche Bewegungsrichtung an der speziellen Stelle am Fahrzeug durch die Bürste erzielt wird, was erneut zu einer Verbesserung des Waschergebnisses führt.

Vorzugsweise ist die zylinderförmige Außenfläche zur zylinderförmigen Innenfläche um 4° bis 10°, insbesondere 5° gekippt ausgebildet. Bei diesen Kippwinkeln konnte die entstehende Sauberkeit des Fahrzeugs zusätzlich erhöht werden. Dennoch bleiben die Trägerelemente einfach herstellbar.

In einer bevorzugten Ausführungsform weist das Trägerelement an den axialen Enden jeweils eine Grundfläche auf, die zur zylinderförmigen Innenfläche senkrecht angeordnet ist und zur zylinderförmigen Außenfläche einen Winkel einschließt, der über den Umfang innerhalb von 180° von zwischen 65° und 88° bis zwischen 92° und 115° wächst. Dies bedeutet, dass die Grundflächen jeweils vollständig aufeinander aufliegen, so dass Zwischenräume vermieden werden. Die Montage kann entsprechend durch einfaches Aufschieben auf die angetriebene Drehwelle erfolgen. Auf zusätzliche Bauteile kann verzichtet werden.

Vorzugsweise weist die Erstreckungsrichtung der Ausnehmungen eine Komponente in Achsrichtung auf und eine Komponente in Umfangsrichtung auf. Die Ausnehmungen sind entsprechend schräg ausgebildet, wodurch auch unterschiedliche Anpresskräfte an den zu waschenden Stellen erzeugt werden, was wiederum Auswirkungen auf die Güte der Reinigung hat.

Diese Wirkung wird noch verstärkt, wenn die Komponente in Umfangsrichtung in Achsrichtung wächst, so dass die Ausnehmungen bogenförmig ausgebildet sind.

Weiterhin ist es vorteilhaft, wenn die Ausnehmungen einen kreissegmentförmigen Querschnitt aufweisen und von außen in Richtung der zylinderförmigen Außenfläche betrachtet zur Außenfläche einen Hinterschnitt aufweisen. Entsprechend können die einzuführenden Klemmstangen als einfache Rundstangen ausgeführt werden, die entsprechend einfach zu montieren sind, da deren Drehrichtung nicht beachtet werden muss. Dennoch weisen die Klemmstangen und mit ihnen die Bandelemente durch den Hinterschnitt einen festen Sitz in den Ausnehmungen auf.

Des Weiteren ist an den axialen Enden der Trägerelemente jeweils zwischen den Ausnehmungen vorzugsweise eine Nut ausgebildet ist, die die Ausnehmungen miteinander an den axialen Enden verbindet. Die Stangen können an ihren Enden Erweiterungen aufweisen, welche nach dem Einschieben in die Ausnehmungen in diese Nuten greifen, wodurch die Stangen gegen ein Herausfallen in Einschieberichtung gesichert sind, ohne dass zusätzliche Bauteile benötigt werden.

Besonders bevorzugt ist es, wenn das Trägerelement durch 3D-Drucken hergestellt ist. Bei diesem Verfahren entfällt eine folgende Bearbeitung des Trägerelementes. Zusätzlich ist die Herstellung sehr einfach und kostengünstig trotz der komplizierten Form der zueinander gekippten Zylinder und der vorhandenen Hinterschnitte.

Bezüglich der Drehwaschbürste ist vorzugsweise das erste Trägerelement baugleich mit dem zweiten Trägerelement ausgebildet und axial entgegengesetzt zum zweiten Trägerelement auf der Drehwelle angeordnet. Dies bedeutet, dass die Ebene zu der die Drehachse senkrecht angeordnet ist, um 180° geklappt wird. Auf diese Weise können die gleichen Feder-Nutverbindungen beim Einführen der Trägerelemente auf die Drehwelle genutzt werden. Es ist daher ausreichend eine einzige Art von Trägerelementen herzustellen und dennoch einen Wechsel auf der Welle bezüglich der Kipprichtung des äußeren Zylinders zum inneren Zylinder herzustellen.

Zur drehfesten Befestigung der Trägerelemente auf der Drehwelle sind vorteilhafterweise an der zylinderförmigen Innenfläche drei sich axial erstreckende Erhebungen ausgebildet sind, die um 120° versetzt zueinander angeordnet sind und die in korrespondierende Nuten an der Drehwelle greifen.

Es wird somit ein Trägerelement zum Befestigen von Bandelementen einer Drehwaschbürste sowie eine Drehwaschbürste mit derartigen Trägerelementen geschaffen, durch deren Verwendung das Waschergebnis im Vergleich zu bekannten Drehwaschbürsten deutlich verbessert wird, da der Auftreffwinkel beziehungsweise die Auftreffrichtung und die Auftreffgeschwindigkeit der Bandelemente auf einer Position des zu waschenden Fahrzeugs während einer Umdrehung der Bürste unterschiedlich ist. Dennoch bleibt die Drehwaschbürste einfach und kostengünstig herstellbar.

Ein Ausführungsbeispiel eines erfindungsgemäßen Trägerelementes sowie einer Drehwaschbürste ist in den Figuren dargestellt und wird nachfolgend beschrieben.
Figur 1 zeigt eine perspektivische Darstellung zweier aufeinandergesetzter erfindungsgemäßer Trägerelemente.
Figur 2 zeigt eine Kopfansicht eines erfindungsgemäßen Trägerelementes, bei dem beispielhaft zwei Bandelemente eingesetzt sind.
Figur 3 zeigt eine Seitenansicht der zwei in Figur 1 dargestellten aufeinandergesetzten erfindungsgemäßen Trägerelemente in geschnittener Darstellung.
Figur 4 zeigt eine schematische Darstellung einer erfindungsgemäßen Drehwaschbürste.

Das erfindungsgemäße Trägerelement 10 besteht im Wesentlichen aus einem Hohlzylinder, bei dem jedoch eine den Hohlzylinder nach radial innen begrenzende zylinderförmige Innenfläche 12 um etwa 5° zu einer den Hohlzylinder nach radial außen begrenzenden, zylinderförmigen Außenfläche 14 gekippt ausgebildet ist. Dies bedeutet, dass eine Mittelachse 16 oder Symmetrieachse der zylinderförmigen Innenfläche 12 zu einer Mittelachse 18 oder Symmetrieachse der zylinderförmigen Außenfläche 14 einen Winkel von 10° einschließt.

An der zylinderförmigen Innenfläche 12 sind drei sich axial erstreckende Erhebungen 20 ausgebildet, die um 120° versetzt zueinander angeordnet sind und sich von einer ersten das Trägerelement 10 axial begrenzenden Grundfläche 22 des Trägerelementes 10 bis zu einer zweiten axial begrenzenden Grundfläche 24 am gegenüberliegenden axialen Ende des Trägerelementes 10 erstrecken. Die Grundflächen 22, 24 schließen zur Mittelachse 16 der zylinderförmigen Innenfläche 12 einen 90°-Winkel ein.

An der zylinderförmigen Außenfläche 14 sind insgesamt zwölf gleichmäßig über den Umfang verteilte, sich axial von der ersten Grundfläche 22 zur gegenüberliegenden zweiten Grundfläche 24 erstreckende Ausnehmungen 26 ausgebildet. Diese Ausnehmungen 26 weisen einen runden beziehungsweise kreissegmentförmigen Querschnitt auf, wobei der Teilkreis deutlich über die Hälfte eines Kreises ausmacht, der Mittelpunkt des Kreises also innerhalb der Ausnehmung 26 angeordnet ist. Von außen auf die zylinderförmige Außenfläche 14 betrachtet ergibt sich entsprechend eine Öffnung 27 sowie ein verdeckter Hinterschnitt 28 an beiden Seiten, da die Ausnehmungen 26 zum Teil von einer vorstehenden Wand 30 der zylinderförmigen Außenfläche 14 verdeckt werden.

Diese Ausnehmungen 26 erstrecken sich jedoch nicht rein axial, sondern weisen auch eine Erstreckungskomponente in Umfangsrichtung auf, welche mit steigender Entfernung von der ersten Grundfläche 22 wächst, so dass sich die Ausnehmungen 26 bogenförmig erstrecken.

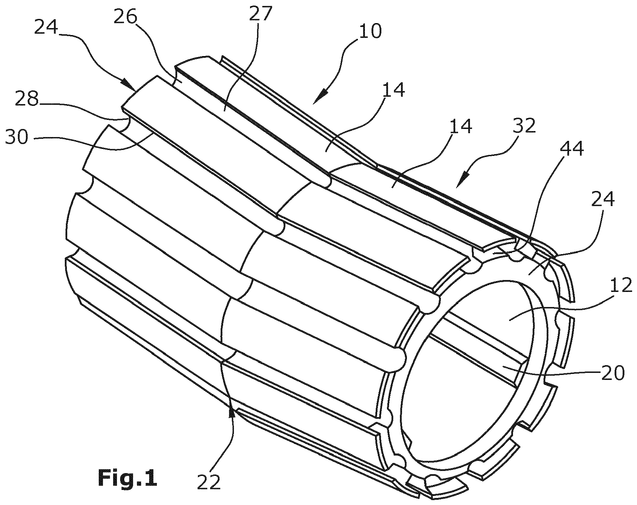

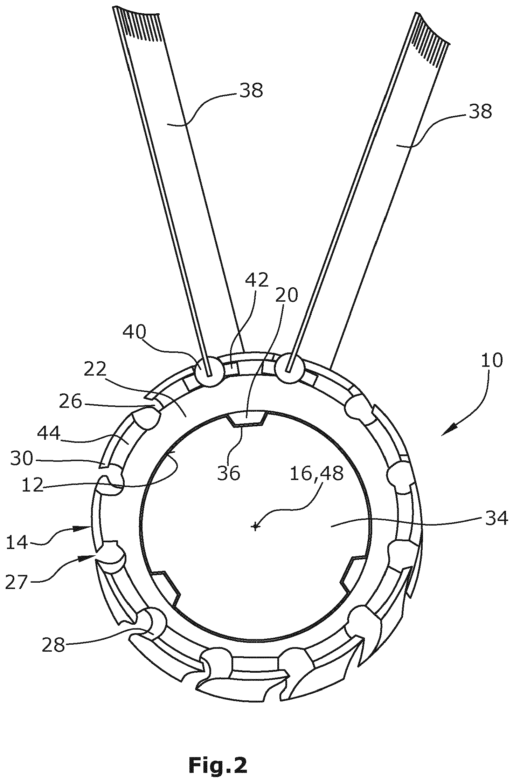

In den Figuren 1 bis 3 sind jeweils ein erstes Trägerelement 10 und ein zweites Trägerelement 32 dargestellt, die mit ihren Grundflächen 22 aufeinander liegen. Dabei ist das zweite Trägerelement um 180° um die Grundfläche 22 gekippt, so dass die Erhebungen 20 beider Trägerelemente 10, 32 jeweils ineinander übergehen, also auf gemeinsamen Linien angeordnet sind.

Dies hat den Vorteil, dass zwei baugleiche Trägerelemente 10, 32 genutzt werden können, bei denen die Schräge der Außenfläche 14 in entgegengesetzter Richtung verläuft, die Außenfläche 14 also entgegengesetzt gekippt ist.

Die beiden Trägerelemente 10, 32 können entsprechend auf eine Drehwelle 34 aufgesetzt werden, an der drei axial durchgängige Nuten 36 ausgebildet sind, in die die Erhebungen 20 der Trägerelemente 10, 32 greifen, wodurch diese drehfest zur Drehwelle 34 angeordnet sind.

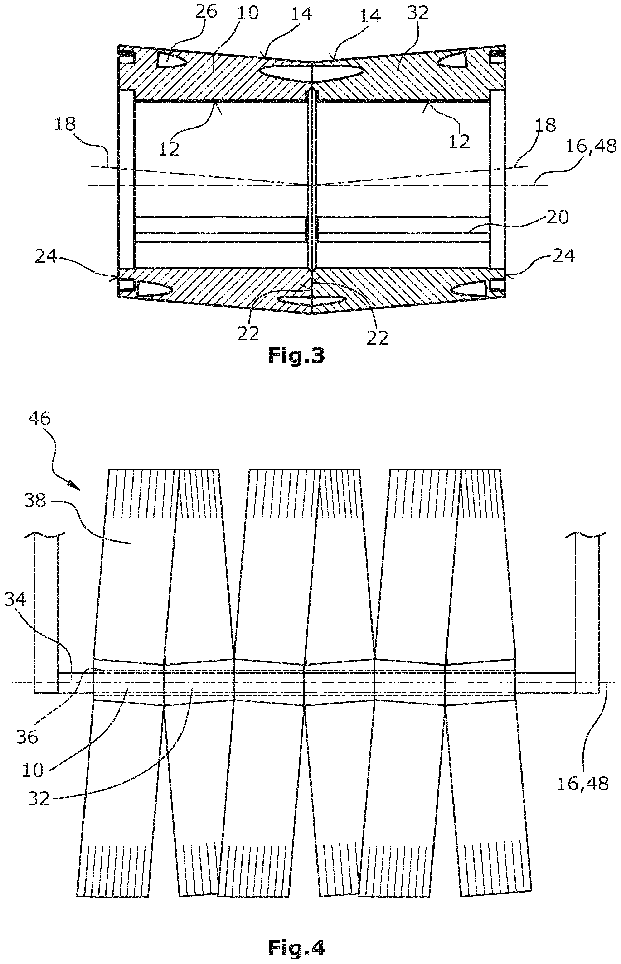

An den Trägerelementen 10, 32 werden, wie in Figur 3 zu erkennen ist, Bandelemente 38 befestigt, die an ihren Enden streifenförmig ausgebildet sind. An ihrem zum Trägerelement 10, 32 weisenden entgegengesetzten Enden sind diese Bandelemente 38 jeweils an einer Klemmstange 40 befestigt, welche eine zu den sich axial erstreckenden Ausnehmungen 26 korrespondierende Form aufweist. An ihrem einen axialen Ende weisen die Klemmstangen 40 jeweils eine radiale Erweiterung 42 auf, mit der die Klemmstangen 40 in Nuten 44 greifen, die an den axialen Enden der Trägerelemente 10, 32 jeweils zwischen den Ausnehmungen 26 ausgebildet sind und diese miteinander verbinden. Entsprechend wird die Klemmstange 40 axial in die entsprechende Ausnehmung 26 eingeführt, wobei die Bandelemente 38 nach radial außen durch die Öffnungen 27 ragen, bis die Erweiterungen 42 gegen den Boden der Nuten 44 anliegen.

Eine Drehwaschbürste 46, wie sie in Figur 4 dargestellt ist, wird nun dadurch geschaffen, dass mehrere der Trägerelemente mit den Bandelementen 38 jeweils um 180° gekippt zueinander auf die Drehwelle 34 geschoben werden, wobei immer abwechselnd entweder die ersten Grundflächen 22 oder die zweiten Grundflächen 24 zweier benachbarter Trägerelemente 10, 32 aneinander anliegen.

Wird die Drehwelle 34 nun um ihre Drehachse 48 gedreht, die der Mittelachse der zylinderförmigen Innenfläche 12 entspricht, gelangen die Enden der Bandelemente 38 mit einer Stelle auf dem zu waschenden Fahrzeug in Kontakt, wobei jedes Bandelement 38 durch die gekippt angeordnete Außenfläche 14 und die damit auch gekippt angeordneten Bandelemente 38 in einem anderen Winkel auf die entsprechende Stelle auftrifft. Beim Übereinanderlegen der aufeinander folgenden Bewegungen der einzelnen Bandelemente entsteht der Eindruck, als würde die waagerechte Bewegung von einer senkrecht hierzu angeordneten Bewegung überlagert. Die wird noch durch die bogenförmige Anordnung der Bandelemente in den Trägerelementen verstärkt. Durch die unterschiedlichen Auftreffwinkel wird der Wascheffekt deutlich verbessert, da auch minimale Unebenheiten im Lack erreicht werden.

Es sollte deutlich sein, dass die vorliegende Erfindung nicht auf das beschriebene Ausführungsbeispiel beschränkt ist, sondern verschiedene konstruktive Änderungen denkbar sind, ohne den Schutzbereich des Hauptanspruchs zu verlassen.

## Patentansprüche

1. Trägerelement (10; 32) zum Befestigen von Bandelementen (38) einer Drehwaschbürste (46) mit
einer zylinderförmigen Innenfläche (12), mit der das Trägerelement (10, 32) zumindest drehfest auf einer Drehwelle (34) befestigbar ist, einer zylinderförmigen Außenfläche (14), an der die Bandelemente (38) befestigbar sind,
sich zumindest axial erstreckenden Ausnehmungen (26), die in der zylinderförmigen Außenfläche (14) ausgebildet sind, und in die Klemmstangen (40) zur Befestigung der Bandelemente (38) einführbar sind,
**dadurch gekennzeichnet, dass**
die zylinderförmige Außenfläche (14) zur zylinderförmigen Innenfläche (12) um 2° bis 25° gekippt ausgebildet ist.

2. Trägerelement (10; 32) zum Befestigen von Bandelementen (38) einer Drehwaschbürste (46) nach Anspruch 1,
**dadurch gekennzeichnet, dass**
die zylinderförmige Außenfläche (14) zur zylinderförmigen Innenfläche (12) um 4° bis 10° gekippt ausgebildet ist.

3. Trägerelement (10; 32) zum Befestigen von Bandelementen (38) einer Drehwaschbürste (46) nach Anspruch 1 oder 2,
**dadurch gekennzeichnet, dass**
das Trägerelement (10; 32) an den axialen Enden jeweils eine Grundfläche (22, 24) aufweist, die zur zylinderförmigen Innenfläche (12) senkrecht angeordnet ist und zur zylinderförmigen Außenfläche (14) einen Winkel einschließt, der über den Umfang innerhalb von 180° von zwischen 65° und 88° bis zwischen 92° und 115° wächst.

4. Trägerelement (10; 32) zum Befestigen von Bandelementen (38) einer Drehwaschbürste (46) nach einem der vorhergehenden Ansprüche,
**dadurch gekennzeichnet, dass**
die Erstreckungsrichtung der Ausnehmungen (26) eine Komponente in Achsrichtung aufweist und eine Komponente in Umfangsrichtung.

5. Trägerelement (10; 32) zum Befestigen von Bandelementen (38) einer Drehwaschbürste (46) nach Anspruch 4,
**dadurch gekennzeichnet, dass**
die Komponente in Umfangsrichtung der Erstreckungsrichtung der Ausnehmungen (26) in Achsrichtung wächst.

6. Trägerelement (10; 32) zum Befestigen von Bandelementen (38) einer Drehwaschbürste (46) nach einem der vorhergehenden Ansprüche,
**dadurch gekennzeichnet, dass**
die Ausnehmungen (26) einen kreissegmentförmigen Querschnitt aufweisen und von außen in Richtung der zylinderförmigen Außenfläche (14) betrachtet zur Außenfläche (14) einen Hinterschnitt (28) aufweisen.

7. Trägerelement (10; 32) zum Befestigen von Bandelementen (38) einer Drehwaschbürste (46) nach einem der vorhergehenden Ansprüche,
**dadurch gekennzeichnet, dass**
an den axialen Enden der Trägerelemente (10; 32) jeweils zwischen den Ausnehmungen (26) eine Nut (44) ausgebildet ist, die die Ausnehmungen (26) miteinander an den axialen Enden verbindet.

8. Trägerelement (10; 32) zum Befestigen von Bandelementen (38) einer Drehwaschbürste (46) nach einem der vorhergehenden Ansprüche,
**dadurch gekennzeichnet, dass**
das Trägerelement (10; 32) durch 3D-Drucken hergestellt ist.

9. Drehwaschbürste (46) mit Trägerelementen (10, 32) nach einem der vorhergehenden Ansprüche und mit
einer Drehwelle (34), auf der mindestens zwei der Trägerelemente (10, 32) auf ihren Grundflächen (22, 24) aufeinander aufliegend zumindest drehfest befestigt sind,
Bandelementen (38), die mittels Klemmstangen (40) in den Ausnehmungen (26) der zylinderförmigen Außenfläche (14) befestigt sind,
**dadurch gekennzeichnet, dass**
eine Drehachse (48) der Drehwelle (34) einer Mittelachse (16) der zylinderförmigen Innenfläche (12) entspricht und die zylinderförmige Außenfläche (14) des jeweils ersten Trägerelementes (10) zur zylinderförmigen Außenfläche (14) des jeweils gegenüberliegenden zweiten Trägerelementes (32) in entgegengesetzter Richtung zur Drehachse (48) der Drehwelle (34) gekippt ist.

10. Drehwaschbürste (46) mit Trägerelementen (10, 32) nach Anspruch 9,
**dadurch gekennzeichnet, dass**
das erste Trägerelement (10) baugleich mit dem zweiten Trägerelement (32) ausgebildet und axial entgegengesetzt zum zweiten Trägerelement (32) auf der Drehwelle (34) angeordnet ist.

11. Drehwaschbürste (46) mit Trägerelementen (10, 32) nach Anspruch 10,
**dadurch gekennzeichnet, dass**
an der zylinderförmigen Innenfläche (12) drei sich axial erstreckende Erhebungen (20) ausgebildet sind, die um 120° versetzt zueinander angeordnet sind und die in korrespondierende Nuten (36) an der Drehwelle (34) greifen.

## Claims

1. Support element (10; 32) for fastening strip elements (38) of a rotary washing brush (46) with
a cylindrical inner surface (12), with which the support element (10, 32) can be fastened at least non-rotatably on a rotary shaft (34),
a cylindrical outer surface (14) to which the strip elements (38) can be attached,
at least axially extending recesses (26), which are formed in the cylindrical outer surface (14) and into which clamping rods (40) can be inserted for fastening the strip elements (38),
**characterised in that**
the cylindrical outer surface (14) is tilted by 2° to 25° relative to the cylindrical inner surface (12).

2. Support element (10; 32) for fastening strip elements (38) of a rotary washing brush (46) according to claim 1,
**characterised in that**
the cylindrical outer surface (14) is tilted by 4° to 10° relative to the cylindrical inner surface (12).

3. Support element (10; 32) for fastening strip elements (38) of a rotary washing brush (46) according to claim 1 or 2,
**characterised in that**
the support element (10; 32) has a base surface (22, 24) at each of the axial ends, which is arranged perpendicular to the cylindrical inner surface (12) and forms an angle to the cylindrical outer surface (14) which increases over the circumference within 180° from between 65° and 88° to between 92° and 115°.

4. Support element (10; 32) for fastening strip elements (38) of a rotary washing brush (46) according to one of the preceding claims, **characterised in that**
the direction of extension of the recesses (26) has a component in the axial direction and a component in the circumferential direction.

5. Support element (10; 32) for fastening strip elements (38) of a rotary washing brush (46) according to claim 4,
**characterised in that**
the component in the circumferential direction of the direction in which the recesses (26) extend increases in the axial direction.

6. Support element (10; 32) for fastening strip elements (38) of a rotary washing brush (46) according to one of the preceding claims,
**characterised in that**
the recesses (26) have a circular segment-shaped cross-section and have an undercut (28) when viewed from the outside in the direction of the cylindrical outer surface (14) towards the outer surface (14).

7. Support element (10; 32) for fastening strip elements (38) of a rotary washing brush (46) according to one of the preceding claims,
**characterised in that**
a groove (44) is formed between the recesses (26) at the axial ends of the support elements (10; 32), which connects the recesses (26) to one another at the axial ends.

8. Support element (10; 32) for fastening strip elements (38) of a rotary washing brush (46) according to one of the preceding claims,
**characterised in that**
the support element (10; 32) is produced by 3D printing.

9. Rotary washing brush (46) with support elements (10, 32) according to one of the preceding claims and with
a rotary shaft (34), on which at least two of the support elements (10, 32) are fixed, at least non-rotatably, resting on one another on their base surfaces (22, 24),
strip elements (38), which are fastened in the recesses (26) of the cylindrical outer surface (14) by means of clamping rods (40),
**characterised in that**
an axis of rotation (48) of the rotary shaft (34) corresponds to a centre axis (16) of the cylindrical inner surface (12) and the cylindrical outer surface (14) of the respective first support element (10) is tilted towards the cylindrical outer surface (14) of the respective opposite second support element (32) in the opposite direction to the axis of rotation (48) of the rotary shaft (34).

10. Rotary washing brush (46) with support elements (10, 32) according to claim 9,
**characterised in that**
the first support element (10) is of identical construction to the second support element (32) and is arranged axially opposite the second support element (32) on the rotary shaft (34).

11. Rotary washing brush (46) with support elements (10, 32) according to claim 10,
**characterised in that**
three axially extending projections (20) are formed on the cylindrical inner surface (12), which are arranged offset by 120° to one another and which engage in corresponding grooves (36) on the rotary shaft (34).

## Revendications

1. Élément porteur (10 ; 32) permettant de fixer des éléments de bande (38) d'une brosse de lavage rotative (46) comportant
une surface interne cylindrique (12), avec laquelle l'élément porteur (10, 32) peut être fixé au moins sans rotation sur un arbre rotatif (34), une surface externe cylindrique (14), sur laquelle les éléments de bande (38) peuvent être fixés,
des évidements (26) s'étendant au moins axialement, qui sont formés dans la surface externe cylindrique (14), et dans lesquels des barres de serrage (40) peuvent être introduites pour la fixation des éléments de bande (38),
**caractérisé en ce que**
la surface externe cylindrique (14) est configurée de manière à être inclinée de 2° à 25° par rapport à la surface interne cylindrique (12).

2. Élément porteur (10 ; 32) permettant de fixer des éléments de bande (38) d'une brosse de lavage rotative (46) selon la revendication 1,
**caractérisé en ce que**
la surface externe (14) de forme cylindrique est configurée de manière à être inclinée de 4° à 10° par rapport à la surface interne (12) de forme cylindrique.

3. Élément porteur (10 ; 32) permettant de fixer des éléments de bande (38) d'une brosse de lavage rotative (46) selon la revendication 1 ou 2,
**caractérisé en ce que**
l'élément porteur (10 ; 32) présente aux extrémités axiales respectivement une surface de base (22, 24) qui est disposée perpendiculairement à la surface interne cylindrique (12) et qui forme avec la surface externe cylindrique (14) un angle qui croît sur la circonférence dans une plage de 180° entre 65° et 88° et entre 92° et 115°.

4. Élément porteur (10 ; 32) permettant de fixer des éléments de bande (38) d'une brosse de lavage rotative (46) selon l'une des revendications précédentes,
**caractérisé en ce que**
la direction d'extension des évidements (26) présente un composant dans la direction axiale et un composant dans la direction circonférentielle.

5. Élément porteur (10 ; 32) permettant de fixer des éléments de bande (38) d'une brosse de lavage rotative (46) selon la revendication 4,
**caractérisé en ce que**
le composant croît dans la direction circonférentielle de la direction d'extension des évidements (26) dans la direction axiale.

6. Élément porteur (10 ; 32) permettant de fixer des éléments de bande (38) d'une brosse de lavage rotative (46) selon l'une des revendications précédentes,
**caractérisé en ce que**
les évidements (26) présentent une section transversale en forme de segment de cercle et, vus de l'extérieur en direction de la surface externe cylindrique (14), présentent une contre-dépouille (28) par rapport à la surface externe (14).

7. Élément porteur (10 ; 32) permettant de fixer des éléments de bande (38) d'une brosse de lavage rotative (46) selon l'une des revendications précédentes,
**caractérisé en ce que**
aux extrémités axiales des éléments porteurs (10 ; 32), une rainure (44) est formée respectivement entre les évidements (26), qui relie les évidements (26) les uns aux autres aux extrémités axiales.

8. Élément porteur (10 ; 32) permettant de fixer des éléments de bande (38) d'une brosse de lavage rotative (46) selon l'une des revendications précédentes,
**caractérisé en ce que**
l'élément porteur (10 ; 32) est fabriqué par impression 3D.

9. Brosse de lavage rotative (46) avec des éléments porteurs (10, 32) selon l'une des revendications précédentes et comportant
un arbre rotatif (34), sur lequel au moins deux des éléments porteurs (10, 32) sont fixés au moins sans rotation en reposant l'un sur l'autre sur leurs surfaces de base (22, 24),
des éléments de bande (38) qui sont fixés au moyen de barres de serrage (40) dans les évidements (26) de la surface externe cylindrique (14),
**caractérisé en ce que**
un axe de rotation (48) de l'arbre de rotation (34) correspond à un axe central (16) de la surface interne cylindrique (12) et la surface externe cylindrique (14) du premier élément porteur (10) respectif est basculée par rapport à la surface externe cylindrique (14) du second élément porteur (32) respectif opposé dans une direction opposée à l'axe de rotation (48) de l'arbre de rotation (34).

10. Brosse de lavage rotative (46) comportant des éléments porteurs (10, 32) selon la revendication 9,
**caractérisé en ce que**
le premier élément porteur (10) est de construction identique au second élément porteur (32) et est disposé axialement à l'opposé du second élément porteur (32) sur l'arbre rotatif (34).

11. Brosse de lavage rotative (46) comportant des éléments porteurs (10, 32) selon la revendication 10,
**caractérisé en ce que**
trois saillies (20) s'étendant axialement sont formées sur la surface interne cylindrique (12), qui sont décalées de 120° les unes aux autres et qui viennent en prise dans des rainures (36) correspondantes sur l'arbre rotatif (34).
